# EUROPEAN PATENT APPLICATION

(11) **EP 2 739 009 A1**
(43) Date of publication of application: **04.06.2014**
(21) Application number: 12306498.2
(22) Date of filing: 30.11.2012
(51) Int. Cl.: H04L 29/08, G06F 17/30, H04W 4/20

(54) **Process for selecting at least one relevant multimedia analyser for a multimedia content to be analysed in a network**

(71) Applicant: Alcatel Lucent, 75007 Paris (FR)
(72) Inventor: Gaste, Yann, 91620 Nozay (FR); Picault, Jérôme, 91620 Nozay (FR)
(74) Representative: Sayettat, Julien Christian

(57) **Abstract**

Process for selecting at least one relevant multimedia analyser (1, 1 a) for a multimedia content (2) to be analysed in a network, said process providing for:
- extracting and analysing the social interactions (3) relating to said multimedia content to identify a social footprint (4) for said multimedia content;
- using said social footprint for selecting said relevant multimedia analyser;
- suggesting said relevant multimedia analyser for analysing said multimedia content.

## Description

The invention relates to a process for selecting a relevant multimedia analyser for a multimedia content to be analysed in a network, such as a system comprising means for implementing such a process.

A lot of multimedia contents are viewed and/or uploaded each minute on Internet, such as photos on web photo sharing platforms such as Flickr®, or videos on video sharing platforms such as Youtube®. Moreover, sharing platforms offers to their users the possibility to do social interactions around shared multimedia contents, for example by posting comments relating to said multimedia contents.

In particular, a lot of users of such platforms rely on comments posted about multimedia contents for choosing the contents they want to see, notably before watching a broadcast TeleVision video content. Moreover, more and more of such multimedia sharing platforms take advantages of social network platforms such as Facebook® or Twitter®, wherein users can share comments about multimedia contents displayed on said sharing platforms.

Thus, it is necessary to index multimedia contents by using their social contexts, i.e. the social interactions that are made around them, so as to foster further accesses to said multimedia contents, not only for viewing them, but also for make further compositions and/or transformations about them. In particular, multimedia content indexing is generally based on metadata associated to said contents, so that it is crucial to benefit from high quality technical means for generating high quality metadata.

To generate metadata, the use of multimedia analysers is known for some years, said analysers being adapted to precisely detect and annotate specific elements in video and/or image parts of a multimedia content through high-level feature detection. The result of a high level multimedia analysis is generally based on domain ontologies that allow interpreting lower level features, such that said lower level features would be interpreted differently with another domain ontology.

However, to be really efficient, these multimedia analysers require a prior knowledge about the domain they are working on. Thus, such multimedia analysers will do efficient analysis when employed in closed environments, such as medicine, but will be less efficient when employed in open and wide environments, such as Internet, wherein multimedia contents can concern a lot of different domains. For a better efficiency, several semantic multimedia analysers can be used in parallel to detect different elements in a same multimedia content, but such a solution can quickly lead to performance and scalability issues.

The article "Leveraging Social Media For Scalable Object Detection" (E. CHATZILARI, S. NIKOLOPOULOS, I. PATRAS, I. KOMPATSIARIS) recognizes that the known methods for training multimedia analysers are more and more expensive and require manual annotation which limit their adaptation to different types of objects and domains, whereas the dramatic spreading of social media applications has made available a tremendous volume of tagged images that represents a promising source of information for such trainings.

However, this article also asserts that the nature of annotations in social applications and the noise existing in the associated information, due to lack of structure, ambiguity, redundancy and emotional tagging, prevents them from being readily compatible with existing methods for training, and thus proposes a method for solving this problem that uses the collective knowledge aggregated in social network platforms to automatically determine a set of image regions that can be associated with a certain object, said set being used for training easily a pre selected multimedia analyser.

Nevertheless, the method of this article is not totally satisfying, as it requires a pre selection of the multimedia analyser to be trained, and thus specific knowledge for different domains, which is too complicated.

The article "Multimedia Content Analysis Using Both Audio and Visual Clues" (Y. WANG, Z.LIU, J-C. HUANG) proposes a known method that uses jointly audio and visual information of a multimedia content to index and summarize said multimedia content. To do so, the method uses selected algorithms for segmenting the document into semantically meaning full units, notably according to image frames, sound tracks, texts that can be extracted from image frames or spoken words that can be deciphered from sound tracks, classifying each unit into a predefined scene type, and indexing and summarizing the multimedia document for efficient retrieval and browsing.

However, this method uses pre selected analysers for classifying multimedia contents and does not provide for using information coming from external sources, such as social interactions around said multimedia contents.

The article "Automatic Selection of Object Recognition Methods Using Reinforcement Learning" (R.A.C. BIANCHI, A. RAMISA, R. LOPES DE MANTARAS, 2008) presents a method that uses reinforcement learning to decide automatically which algorithm should be used to recognize objects seen by a mobile robot computer vision system in an indoor environment, said method being based on simple attributes extracted on line from the images, such as mean intensity and intensity deviation.

However, this method only provides for selecting an algorithm within a same family of algorithms, notably object recognition algorithms. Thus, this method seems difficult to transpose for selecting an algorithm among heterogeneous algorithm families. Moreover, this method does not provide for using social information for selecting the algorithm.

The invention aims to improve the prior art by proposing a process for selecting dynamically, in an open environment, the most appropriate multimedia analyser for a multimedia content to be made, and thus by relying on social interactions of users around said multimedia content.

For that purpose, and according to a first aspect, the invention relates to a process for selecting at least one relevant multimedia analyser for a multimedia content to be analysed in a network, said process providing for:
- extracting and analysing the social interactions relating to said multimedia content to identify a social footprint for said multimedia content;
- using said social footprint for selecting said relevant multimedia analyser;
- suggesting said relevant multimedia analyser for analysing said multimedia content.

According to a second aspect, the invention relates to a system for selecting at least one relevant multimedia analyser for a multimedia content to be analysed in a network, said system comprising:
- a social interaction analyser module comprising means for extracting the social interactions relating to said multimedia content and means for analysing said social interactions to identify a social footprint for said multimedia content;
- an environmental scanner module comprising means for using said social footprint to select said relevant multimedia analyser;
- a multimedia meta-analyser module comprising means for suggesting said relevant multimedia analyser to a video analysis module adapted to analyse said multimedia content.

Other aspects and advantages of the invention will become apparent in the following description made with reference to the appended figures, wherein:
- figure 1 represents a system for implementing a process according to an embodiment of the invention;
- figure 2 represents schematically the step of selection of a relevant multimedia analyser according to the social footprint of the multimedia content;
- figure 3 represents schematically the different steps of the process implemented by the system of figure 1.

In relation to those figures, a process for selecting at least one relevant multimedia analyser 1 for a multimedia content 2 to be analysed in a network, such as a system comprising means for implementing such a process, will be described below.

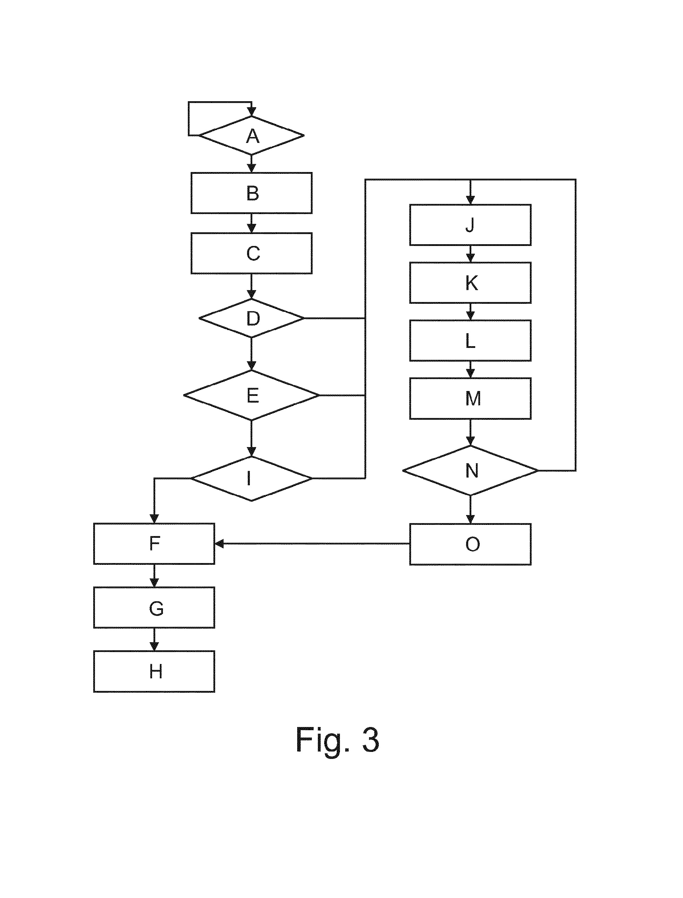

For example, the system can be implemented in the terminal of a user that sees multimedia contents 2 through said terminal on dedicated multimedia sharing platforms, so that the process of the invention is launched at a step A represented on figure 3 as the entering of a new multimedia content 2 is detected by said terminal. To do so, the system is notably adapted to interact with multimedia sharing platforms through public and open application programming interfaces (API) of said platforms.

The process provides for extracting and analysing the social interactions 3 relating to the multimedia content 2 to be analysed, in order to identify a social footprint 4 for said multimedia content. In relation to figure 3, the process provides a first step B, after the step A of detection of a new multimedia content 2 to be analysed, for extracting the related social interactions 3, and a consecutive step C wherein extracted social interactions are analysed.

The social interactions 3 can notably concern the comments, annotations and conversations about the multimedia content of users of a sharing platform wherein said multimedia content is displayed, such as a video sharing platform like the publically available Youtube® solution or the OpenTouch Video Store® solution generally used in enterprises. In particular, the system is adapted to interact with such social networking platforms through public and open application programming interfaces (API) of said platforms.

The social interactions 3 can also concern comments, annotations or conversations about the multimedia content 2 of users of social networking platforms like Facebook® or Twitter®, wherein users can enrich indirectly a multimedia content 2 that is displayed on a television platform via related descriptions, tags and comments.

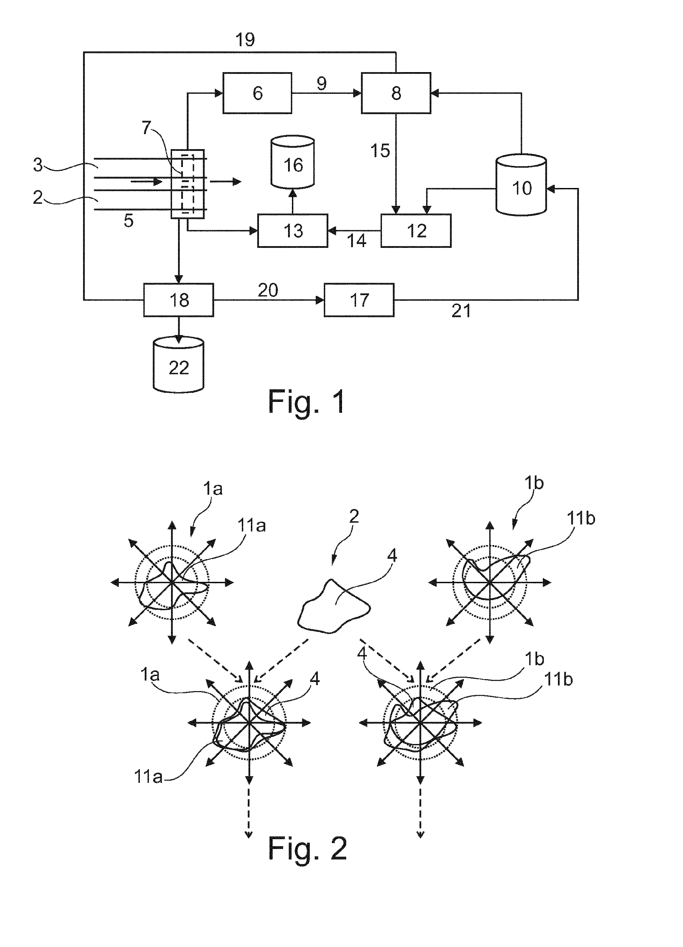

In the embodiment shown on figure 1, the multimedia content 2 and its related social interactions 3 are delivered together to the system in a single stream 5. However, the multimedia content 2 and the social interactions 3 can be delivered through two distinct and synchronized streams. Moreover, in the embodiment shown, the stream 5 containing the multimedia content 2 and its related social interactions 3 can be a live stream that delivers a real time social multimedia content 2, or an offline stream that is uploaded from a dedicated service.

On figure 1, the system comprises a social interaction analyser module 6 comprising means for extracting the social interactions 3 relating to the multimedia content 2 and means for analysing said social interactions to identify a social footprint 4 for said multimedia content. In particular, the module 6 is adapted to extract, among social interactions 3, relevant knowledge to give some clues about what the multimedia content 2 is about. Moreover, as the multimedia content 2 is a live delivered content, the module 6 is adapted to extract such social interactions 3 at given time moments 7 during said delivering, especially instant messages published on social networking platforms.

To do so, the means for extracting of the module 6 can be adapted to extract keywords, notably part-of-speech tagger words, from the text comments associated to the multimedia content 2 among social interactions 3, and to assign a weight to each of said keywords by basing on at least one frequency relating to the occurrence of said keywords in said comments. For example, the frequency can be a Term-Frequency (TF) or an Inverse Document Frequency (IDF).

Moreover, the means for extracting of the module 6 can be refined by being adapted to take into account relationships between keywords, such as lexical relationships like hypernymy, hyponymy or synonymy. To do so, the means for extracting can be adapted to interact with a dictionary platform such as WordNet®.

Besides, the means for extracting can be adapted to match keywords in social interactions 3 with predefined concepts that belong to given ontologies, said ontologies relating to an existing multimedia analyser or being general ontologies coming from semantic repositories, such as the DBPedia® platform.

Thus, the module 6 analyses extracted social interactions 3 to identify a social footprint 4 for said multimedia content. In relation to figure 3, the process provides a step D that follows the step C, wherein the social footprint 4 of the multimedia content 2 is identified.

The social footprint 4 is defined as a patterned arrangement of different kind of social information of the related multimedia content 2. In particular, the social footprint 4 can comprise clustering model characteristics, such as the topics approached by the multimedia content 2 that can notably be represented as a set of keywords or concepts, classified element information, and/or a set relevant metrics like distance connectivity, mean, variance, or weight.

Moreover this information can be completed in the social footprint 4 with information that has been extracted by exploiting the multiple dimensions of the social interaction structure and/or with any other information that is relevant to refine said footprint, such as the top list of the users that contributed and/or influenced the content of the social interactions 3.

In particular, the social footprint 4 can be represented as a distribution of probabilities concerning topics that could eventually be mentioned into the multimedia content 2. Moreover, the profile of users that generated social interactions 3 can be taken into account in the weighting of such probabilities. Indeed, as the topic of football is considered, it is obvious that the content of social interactions 3 from a user that is known as a top influencer or an expert in football will be considered with a stronger importance than social interactions 3 from another user.

The process further provides for using the social footprint 4 for selecting the at least one relevant multimedia analyser 1. As represented on figure 3, the process provides a step E for doing such a selection according to the social footprint 4 that has been identified in step D.

To do so, the system comprises an environmental scanner module 8 comprising means for selecting the at least one relevant multimedia analyser 1 according to the social footprint 4. In relation to figure 1, the social interaction analyser module 6 comprises means for sending to the environmental scanner module 8 a notification 9 comprising the identified social footprint 4.

In particular, the process provides for storing in a database 10 predefined multimedia analysers 1 that are associated with a given social footprint 11, the social footprint 4 of the multimedia analyser 2 further being matched with social footprints 11 of stored multimedia analysers 1 for checking the eventual presence in said database of at least one relevant analyser 1 (see figure 2). In particular, the social footprints 11 comprise a unique identifier that can be entered in the description files of the multimedia analysers 1 associated with said footprints, said files being stored in the database 10.

To do so, in relation to figure 1, the system comprises such a database 10 and the environmental scanner module 8 is adapted to interact with said database to match the social footprint 4 with the social footprints 11 associated with each multimedia analysers 1 stored in said database.

In relation to figure 2, the step E is represented with two multimedia analysers 1a, 1b that are depicted as graphics with their respective associated social footprints 11a, 11b. The matching of social footprints 4, 11a, 11b is represented with the superimposition of the social footprint 4 of the multimedia content 2 successively with the social footprints 11a, 11b of each multimedia analyser 1a, 1b. Thus, the multimedia analyser 1a with the social footprint 11a that presents the closest form from the social footprint 4 would be selected as a relevant analyser for the multimedia content 2.

According to a variant, the environmental scanner module 8 can be adapted to determine a degree of matching between the social footprint 4 of the multimedia content 2 and the social footprints 11a, 11b associated with multimedia analysers 1a, 1b, and thus to compare said degree with a predefined threshold, so that a multimedia analyser 1a with a degree of matching that is above the threshold will be selected as a relevant multimedia analyser 1a, whereas a multimedia analyser 1b with a degree of matching that is below said threshold will not be considered as a relevant analyser.

Once the most relevant multimedia analyser 1 has been selected, the process provides for suggesting said relevant multimedia analyser for analysing the multimedia content 2. To do so, the system comprises a multimedia meta-analyser module 12 which comprises means for suggesting the relevant multimedia analyser 1 to a video analysis module 13 adapted to analyse the multimedia content 2, notably by sending to said video analysis module a notification 14 comprising the identifier of the at least one relevant multimedia analyser 1.

More precisely, the environmental scanner module 8 comprises means for sending to the multimedia meta analyser module 12 a notification 15 comprising an identifier of the identified social footprint 4, the module 12 using said identifier for retrieving from the database 10 the identifier(s) of the corresponding multimedia analyser(s) 1 and sending to the video analysis module 13 said identifier in the notification 14.

Thus, the video analysis module 13 uses the received identifier(s) to activate the corresponding multimedia analyser(s) 1 and analyse the multimedia content 2, for example for generating metadata in relation to said multimedia content that will be stored in a database 16.

In particular, the generated metadata can be added to the multimedia content 2 thanks to dedicated annotations that are inserted in the stream 5 transporting said content. Moreover, the metadata can be used later to index the multimedia content 2 and/or to allow reuse of said multimedia content for further content composition or a summarization.

In relation to figure 3, the process provides a step F wherein the multimedia meta analyser module 12 suggests the at least one relevant multimedia analyser 1 to the video analysis module 13, a step G wherein the video analysis module 13 activates said relevant multimedia analyser and a step H wherein metadata are generated further to said analysis and stored in the database 16. The steps F, G, H are notably triggered consecutively as the step E has been successfully realised, i.e. as a relevant multimedia analyser has been found in the database 10.

On the contrary, if no relevant multimedia analyser 1 has been found in the database 10, the process provides for launching an evaluation wherein multimedia analysers 1 are trained to identify the at least one relevant multimedia analyser 1 for the multimedia content 2 to be analysed. To do so, the system comprises at least one module with which the environmental scanner module 8 is adapted to interact for launching such an evaluation.

In particular, the database 10 can contain a multimedia analyser 1 that used to be relevant for a given social footprint 4 and thus for the corresponding multimedia content 2, but the relevancy of said multimedia analyser can be obsolete if the social footprint 4 has encountered significant changes, so that said multimedia analyser cannot be considered as a relevant one anymore.

To take into account this aspect, the process can further provide for comparing the updating of the social footprint 11 associated with the identified relevant multimedia analyser 1 with the updating of the social footprint 4 of the multimedia content 2, the evaluation being launched if the social footprint 11 is too obsolete compared to the social footprint 6.

In particular, the process provides a step I wherein the updating of the social footprints 4, 11 are compared, the identified relevant multimedia analyser 1 further being suggested only if its social footprint 11 is sufficiently up to date in relation to the updating of the social footprint 4. On figure 3, the step I is triggered consecutively to step E of identification of relevant analyser(s) 1, so that the suggestion step F will be triggered only if the step I is successfully realised.

To do so, the environmental scanner module 8 can comprise means for comparing the updating of the social footprint 11 associated with the identified relevant multimedia analyser 1 with the updating of the social footprint 4 of the multimedia content 2, so as to launch the evaluation if the module 8 founds the social footprint 11 too obsolete compared to the social footprint 4.

For example, the means for comparing can be adapted to parse the elements of the social footprint 4 by focusing on their history of changes, to run comparisons with other social footprints and their historical data and thus to detect any major updating in said social footprint. Thus, the means for comparing can be adapted to compare the detected updating of the social footprint 4 with the social footprint 11 of the previously identified multimedia analyser(s) 1, the evaluation being launched if the social footprint 11 is too obsolete.

More precisely, the evaluation provides for selecting the multimedia analysers 1 to be trained, building a multimedia evaluation set from multimedia sequences of the multimedia content 2 for training selected multimedia analysers 1 according to said set, and ranking said trained multimedia analysers according to their performances in said training, the relevant multimedia analyser 1 being identified according to said ranking, a social footprint 11 being associated to each multimedia analyser 1 according to said ranking.

In relation to figure 3, the process provides a step J following an unsuccessful step I, wherein the multimedia analysers 1 to be trained are selected. To do so, the system further comprises a multimedia meta analyser assessment module 17 that comprises means for selecting the multimedia analysers 1 to be trained.

In particular, if the social footprint 4 is new, no relevant multimedia analyser 1 has been identified a priori in step E by the environmental scanner module 8. Thus, the means for selecting of the module 17 can be adapted to do the selection via different pathways, such as by basing on developer explicit descriptions of candidate multimedia analysers 1, on pre selection of multimedia analysers 1 that are stored in the database 10 with a copycat social footprint 11, or on randomization processes if no description is available.

Moreover, the system comprises a multimedia content selector module 18 comprising means for building a multimedia evaluation set from multimedia sequences of the multimedia content 2, notably upon reception from the environmental scanner module 8 of a notification 19 comprising the social footprint 4, the building of the evaluation set being notably realised at a step K following the selection step J of multimedia analysers 1 to be trained (figure 3). In particular, the module 18 comprises means for retrieving from the multimedia content 2 multimedia sequences corresponding to elements of the social footprint 4.

The multimedia content selector module 18 also comprises means for sending to the meta analyser assessment module 17 a notification 20 comprising the built multimedia evaluation set, the module 17 comprises means for training selected multimedia analysers 1 according to said set and evaluating their performances in said training, such a training being realised at a step L on figure 3.

The performances of a multimedia analyser 1 evaluate the capacity of said analyser to gather relevant knowledge from the multimedia sequences that have been retrieved for the evaluation set. Moreover, the performances of a multimedia analyser 1 have to analyse can further be evaluated according to conditional policies, such as the frequency of use of said analyser or the proximity of its associated social footprint 11 with the social footprint 4.

The module 17 further comprises means for ranking the trained multimedia analysers 1 according to their performances, which notably takes place at represented step M of figure 3. For example, the ranking can identify the best analysers, whose captured knowledge from the multimedia sequences is quite high, and the worst ones, whose captured knowledge from said sequences is low.

Thus, at a step N, the environmental scanner module 8 identifies at least one relevant multimedia analyser 1 according to the obtained ranking, i.e., in relation to the social footprint 4 of the multimedia content 2 to be analysed, the multimedia analyser(s) with the highest rank(s).

To do so, the process further provides for associating a social footprint 11 to the trained multimedia contents 1 according to the ranking, and the multimedia meta analyser assessment module 17 comprises dedicated means for doing such an association.

Moreover, the process provides for updating the database 10 with the trained multimedia analysers 1 associated with their social footprints 11, so that said trained multimedia analysers could be further be selected as relevant for the multimedia content 2.

In relation to figure 1, the module 17 comprises means for updating the database 10 with the trained multimedia analysers 1 and their associated social footprints, said means being adapted to send to the database 10 a notification 21 comprising the identifiers of the trained multimedia analysers 1 together with the identifiers of their associated social footprints 11.

In particular, at the selection step N, the environmental scanner module 8 can for example determine a degree of matching between the social footprint 4 of the multimedia content 2 to be analysed and the social footprints 11 associated with the trained multimedia analysers 1, and thus compare said degree with a predefined threshold, as previously explained.

Thus, if at least one trained multimedia analyser 1 presents a degree of matching that is above the threshold, the step N is successfully completed and said multimedia analyser is selected in a consecutive step O of the process (figure 3), and thus suggested at the following step F.

On the contrary, if none of the trained multimedia analysers 1 presents a degree of matching that is above the threshold, the step N is not completed and the process triggers another evaluation by returning to the step J for selecting a new set of multimedia analysers 1 to be trained, such a loop being repeated until a trained multimedia analyser 1 presents a satisfying degree of matching.

For further evaluations, the process provides for storing the performances of multimedia analysers 1 in a dedicated database 22, so that the multimedia evaluation set to be used in said further evaluations will be built according to said performances and to the social footprint 4 of the multimedia content 2 to be analysed.

To do so, the multimedia meta analyser assessment module 17 comprises means for storing in the database 22 performances of multimedia analysers 1. In particular, the identifiers of multimedia analysers 1 are stored in at least one dedicated data table together with the identifiers of multimedia sequences of multimedia contents that have been analysed by said analysers during former evaluations.

More precisely, for a same social footprint, the database 22 can comprise at least a positive data table and a negative data table for storing respectively the identifiers of the best analysers 1 and the identifiers of the worst analysers 1 together with the identifiers of the multimedia sequences corresponding to said footprint that have been analysed by said analysers. Thus, a same multimedia analyser 1 can be identified in the positive data table of a social footprint with a first multimedia sequence while being identified in the negative data table of another social footprint with another multimedia sequence.

Moreover, the multimedia content selector module 18 comprises means for interacting with the database 22 and the environmental scanner module 8 to build a multimedia evaluation set according to the performances and to the social footprint 4 of the multimedia content 2 to be analysed. Thus, if a former multimedia content with a social footprint quite similar to the social footprint 4 of the current multimedia content 2 has been previously analysed, the module 18 would search in the database 22 the performances of analysers 1 that were trained on said former content to build the multimedia evaluation set more quickly.

The process of the invention proposes an elegant solution to improve dynamically the selection of appropriate multimedia analysers from social interactions about multimedia contents, so as to continuously rank the available multimedia analysers and activate the relevant ones.

Moreover, the process of the invention allows training almost every multimedia analyser, even the more standard analysers, thanks to a balanced example of positive and negative multimedia evaluation set, while identifying easily the social footprint to be associated with said multimedia analyser.

Thus, the process of the invention allows improving the processing and extraction of metadata from multimedia contents, notably in a wide range of domains, which would be quite useful for applications dedicated to search and/or retrieval, multimedia composition, summarization, or analysis of broadcast programms.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to assist the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Process for selecting at least one relevant multimedia analyser (1, 1a) for a multimedia content (2) to be analysed in a network, said process providing for:
- extracting and analysing the social interactions (3) relating to said multimedia content to identify a social footprint (4) for said multimedia content;
- using said social footprint for selecting said relevant multimedia analyser;
- suggesting said relevant multimedia analyser for analysing said multimedia content.

2. Process according to claim 1, **characterized in that** it provides for storing in a database (10) predefined multimedia analysers (1, 1a, 1b) that are associated with a given social footprint (11, 11a, 11b) , the social footprint (4) of the multimedia content (2) further being matched with social footprints (11, 11a, 11b) of stored multimedia analysers (1, 1a, 1b) for checking the eventual presence in said database of at least one relevant analyser (1, 1a).

3. Process according to claim 2, **characterized in that** it provides, as no relevant multimedia analyser (1, 1a) has been found in the database (10), for launching an evaluation (J, K, L, M, N) wherein multimedia analysers (1, 1a, 1b) are trained to identify at least one relevant multimedia analyser (1, 1a) for the multimedia content (2) to be analysed.

4. Process according to claim 3, **characterized in that** it provides for comparing the updating of the social footprint (11, 11a) associated with the identified relevant multimedia analyser (1, 1a) with the updating of the social footprint (4) of the multimedia content (2), the evaluation (J, K, L, M, N) being launched if the social footprint (11, 11a) of said multimedia analyser is too obsolete compared to the social footprint (4) of said multimedia content.

5. Process according to claim 3 or 4, **characterized in that** the evaluation (J, K, L, M, N) provides for selecting the multimedia analysers (1, 1a, 1b) to be trained, building a multimedia evaluation set from multimedia sequences of the multimedia content (2) for training selected multimedia analysers (1, 1a, 1b) according to said set, and ranking said trained multimedia analysers according to their performances in said training, the relevant multimedia analyser (1, 1a) being identified according to said ranking, a social footprint (11, 11a, 11b) being associated to each multimedia analyser (1, 1a, 1b) according to said ranking.

6. Process according to claim 5, **characterized in that** it provides for updating the database (10) with the trained multimedia analysers (1, 1a, 1b) associated with their social footprint (11, 11a, 11b).

7. Process according to claim 5 or 6, **characterized in that** the performances of multimedia analysers (1, 1a, 1b) are stored in a database (22), the multimedia evaluation set further being built according to said performances and to the social footprint (4) of the multimedia content (2) to be analysed.

8. System for selecting at least one relevant multimedia analyser (1, 1a) for a multimedia content (2) to be analysed in a network, said system comprising:
- a social interaction analyser module (6) comprising means for extracting the social interactions (3) relating to said multimedia content and means for analysing said social interactions to identify a social footprint (4) for said multimedia content;
- an environmental scanner module (8) comprising means for using said social footprint to select said relevant multimedia analyser;
- a multimedia meta-analyser module (12) comprising means for suggesting said relevant multimedia analyser to a video analysis module (13) adapted to analyse said multimedia content.

9. System according to claim 8, **characterized in that** it comprises a database (10) for predefined multimedia analysers (1, 1a, 1b) that are associated with a given social footprint (11, 11a, 11b), the environmental scanner module (8) further being adapted to match the social footprint (4) of the multimedia content (2) with social footprints (11, 11a, 11b) of stored multimedia analysers (1, 1a, 1b) for checking the eventual presence in said database of at least one relevant multimedia analyser (1, 1a).

10. System according to claim 9, **characterized in that** it further comprises one module (17, 18) with which the environmental scanner module (8) is adapted to interact for launching, as said environmental scanner module has found no relevant multimedia analyser (1, 1a) in the database (10), an evaluation (J, K, L, M, N) wherein multimedia analysers (1, 1a, 1b) are trained to identify at least one relevant multimedia analyser (1, 1a) for the multimedia content (2) to be analysed.

11. System according to claim 10, **characterized in that** the environmental scanner module (8) comprises means for comparing the updating of the social footprint (11, 11a) associated with the identified relevant multimedia analyser (1, 1a) with the updating of the social footprint (4) of the multimedia content (2), the evaluation (J, K, L, M, N) being launched if said environmental scanner module founds the social footprint (11, 11a) of said analyser too obsolete compared to the social footprint (4) of said content.

12. System according to claim 10 or 11, **characterized in that** it further comprises a multimedia content selector module (18) comprising means for building a multimedia evaluation set from multimedia sequences of the multimedia content (2), such as a multimedia meta analyser assessment module (17) comprising means for selecting the multimedia analysers (1, 1a, 1b) to be trained, means for training selected multimedia analysers (1, 1a, 1b) according to said multimedia evaluation set, means for ranking said trained multimedia analysers according to their performances in said training, and means for associating a social footprint (11, 11a, 11b) to each multimedia analyser (1, 1a, 1b) according to said ranking, the environmental scanner module (8) further identifying at least one relevant multimedia analyser (1, 1a) according to said ranking.

13. System according to claim 12, **characterized in that** the multimedia meta analyser assessment module (17) comprises means for updating the database (10) with the trained multimedia analysers (1, 1a, 1b) associated with their social footprints (11, 11a, 11b).

14. System according to claim 12 or 13, **characterized in that** the multimedia meta analyser assessment module (17) comprises means for storing performances of multimedia analysers (1, 1a, 1b) in a database (22), the multimedia content selector module (18) comprising means for interacting with said database and the environmental scanner module (8) to build the multimedia evaluation set according to said performances and to the social footprint (4) of the multimedia content (2) to be analysed.
